# EUROPEAN PATENT APPLICATION

(11) **EP 4 443 951 A1**
(43) Date of publication of application: **09.10.2024**
(21) Application number: 24158610.6
(22) Date of filing: 20.02.2024
(51) Int. Cl.: H04W 24/10, H04W 92/20

(54) **MEASUREMENT REPORTING**

(30) Priority: 06.04.2023 GB 202305111
(71) Applicant: Nokia Technologies Oy, 02610 Espoo (FI)
(72) Inventor: KOLLÁR, Martin, 04018 Kosice (SK); PANTELIDOU, Anna, 92160 Antony (FR)
(74) Representative: Bryers Intellectual Property Ltd

(57) **Abstract**

Disclosed is a method comprising transmitting, by a first radio access network node, to a second radio access network node, a request message for requesting one or more measurements, wherein the request message comprises priority information indicating a priority level per a measurement of the one or more measurements; and receiving, by the first radio access network node, from the second radio access network node, a response message indicating whether or not at least one of the one or more measurements can be provided from the second radio access network node.

## Description

### FIELD

The following example embodiments relate to wireless communication.

### BACKGROUND

A radio access network node may require measurements from another radio access network node for example for training or executing inference of a machine learning model. There is a challenge in how to obtain the measurements from the other radio access network node.

### BRIEF DESCRIPTION

The scope of protection sought for various example embodiments is set out by the claims. The example embodiments and features, if any, described in this specification that do not fall under the scope of the claims are to be interpreted as examples useful for understanding various embodiments.

According to an aspect, there is provided an apparatus of a first radio access network node, the apparatus comprising at least one processor, and at least one memory storing instructions that, when executed by the at least one processor, cause the apparatus at least to: transmit, to a second radio access network node, a request message for requesting one or more measurements, wherein the request message comprises priority information indicating a priority level per a measurement of the one or more measurements; and receive, from the second radio access network node, a response message indicating whether or not at least one of the one or more measurements can be provided from the second radio access network node.

According to another aspect, there is provided an apparatus of a first radio access network node, the apparatus comprising: means for transmitting, to a second radio access network node, a request message for requesting one or more measurements, wherein the request message comprises priority information indicating a priority level per a measurement of the one or more measurements; and means for receiving, from the second radio access network node, a response message indicating whether or not at least one of the one or more measurements can be provided from the second radio access network node.

According to another aspect, there is provided a method comprising: transmitting, by a first radio access network node, to a second radio access network node, a request message for requesting one or more measurements, wherein the request message comprises priority information indicating a priority level per a measurement of the one or more measurements; and receiving, by the first radio access network node, from the second radio access network node, a response message indicating whether or not at least one of the one or more measurements can be provided from the second radio access network node.

According to another aspect, there is provided a computer program comprising instructions which, when executed by an apparatus of a first radio access network node, cause the apparatus to perform at least the following: transmitting, to a second radio access network node, a request message for requesting one or more measurements, wherein the request message comprises priority information indicating a priority level per a measurement of the one or more measurements; and receiving, from the second radio access network node, a response message indicating whether or not at least one of the one or more measurements can be provided from the second radio access network node.

According to another aspect, there is provided a computer readable medium comprising program instructions which, when executed by an apparatus of a first radio access network node, cause the apparatus to perform at least the following: transmitting, to a second radio access network node, a request message for requesting one or more measurements, wherein the request message comprises priority information indicating a priority level per a measurement of the one or more measurements; and receiving, from the second radio access network node, a response message indicating whether or not at least one of the one or more measurements can be provided from the second radio access network node.

According to another aspect, there is provided a non-transitory computer readable medium comprising program instructions which, when executed by an apparatus of a first radio access network node, cause the apparatus to perform at least the following: transmitting, to a second radio access network node, a request message for requesting one or more measurements, wherein the request message comprises priority information indicating a priority level per a measurement of the one or more measurements; and receiving, from the second radio access network node, a response message indicating whether or not at least one of the one or more measurements can be provided from the second radio access network node.

According to another aspect, there is provided an apparatus of a second radio access network node, the apparatus comprising at least one processor, and at least one memory storing instructions that, when executed by the at least one processor, cause the apparatus at least to: receive, from a first radio access network node, a request message for requesting one or more measurements, wherein the request message comprises priority information indicating a priority level per a measurement of the one or more measurements; determine, based at least on the priority information, whether at least one of the one or more measurements can be provided to the first radio access network node; and transmit, to the first radio access network node, based on the determination, a response message indicating whether or not the at least one of the one or more measurements can be provided to the first radio access network node.

According to another aspect, there is provided an apparatus of a second radio access network node, the apparatus comprising: means for receiving, from a first radio access network node, a request message for requesting one or more measurements, wherein the request message comprises priority information indicating a priority level per a measurement of the one or more measurements; means for determining, based at least on the priority information, whether at least one of the one or more measurements can be provided to the first radio access network node; and means for transmitting, to the first radio access network node, based on the determination, a response message indicating whether or not the at least one of the one or more measurements can be provided to the first radio access network node.

According to another aspect, there is provided a method comprising: receiving, by a second radio access network node, from a first radio access network node, a request message for requesting one or more measurements, wherein the request message comprises priority information indicating a priority level per a measurement of the one or more measurements; determining, by the second radio access network node, based at least on the priority information, whether at least one of the one or more measurements can be provided to the first radio access network node; and transmitting, by the second radio access network node, to the first radio access network node, based on the determination, a response message indicating whether or not the at least one of the one or more measurements can be provided to the first radio access network node.

According to another aspect, there is provided a computer program comprising instructions which, when executed by an apparatus of a second radio access network node, cause the apparatus to perform at least the following: receiving, from a first radio access network node, a request message for requesting one or more measurements, wherein the request message comprises priority information indicating a priority level per a measurement of the one or more measurements; determining, based at least on the priority information, whether at least one of the one or more measurements can be provided to the first radio access network node; and transmitting, to the first radio access network node, based on the determination, a response message indicating whether or not the at least one of the one or more measurements can be provided to the first radio access network node.

According to another aspect, there is provided a computer readable medium comprising program instructions which, when executed by an apparatus of a second radio access network node, cause the apparatus to perform at least the following: receiving, from a first radio access network node, a request message for requesting one or more measurements, wherein the request message comprises priority information indicating a priority level per a measurement of the one or more measurements; determining, based at least on the priority information, whether at least one of the one or more measurements can be provided to the first radio access network node; and transmitting, to the first radio access network node, based on the determination, a response message indicating whether or not the at least one of the one or more measurements can be provided to the first radio access network node.

According to another aspect, there is provided a non-transitory computer readable medium comprising program instructions which, when executed by an apparatus of a second radio access network node, cause the apparatus to perform at least the following: receiving, from a first radio access network node, a request message for requesting one or more measurements, wherein the request message comprises priority information indicating a priority level per a measurement of the one or more measurements; determining, based at least on the priority information, whether at least one of the one or more measurements can be provided to the first radio access network node; and transmitting, to the first radio access network node, based on the determination, a response message indicating whether or not the at least one of the one or more measurements can be provided to the first radio access network node.

### LIST OF DRAWINGS

In the following, various example embodiments will be described in greater detail with reference to the accompanying drawings, in which
FIG. 1 illustrates an example of a wireless communication network;
FIG. 2 illustrates a functional framework for radio access network intelligence;
FIG. 3 illustrates a signal flow diagram;
FIG. 4 illustrates a signal flow diagram;
FIG. 5 illustrates a signal flow diagram;
FIG. 6 illustrates a signal flow diagram;
FIG. 7 illustrates a flow chart;
FIG. 8 illustrates a flow chart;
FIG. 9 illustrates a flow chart;
FIG. 10 illustrates a flow chart; and
FIG. 11 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies: Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications.

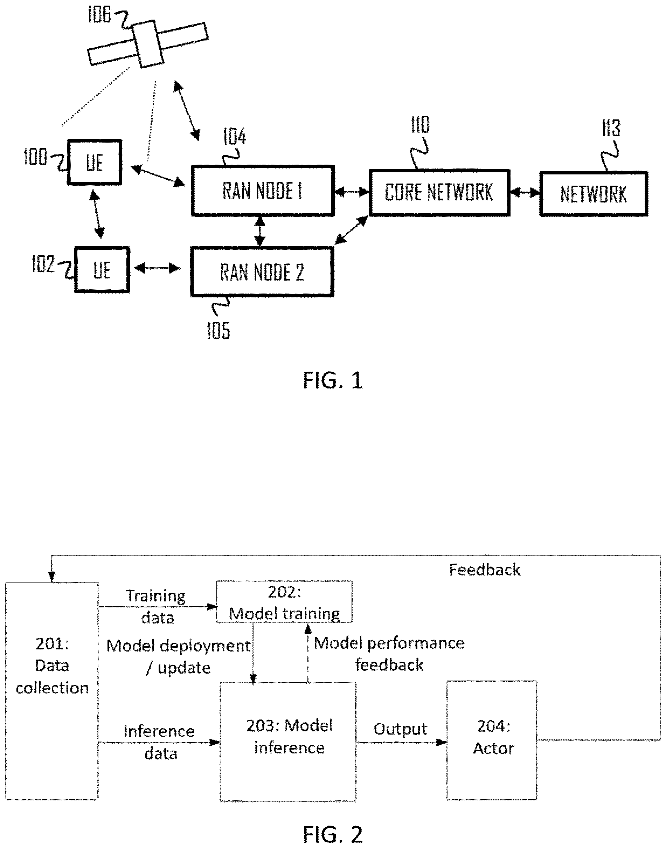

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the embodiments described herein to other wireless communication networks provided with necessary properties.

The example wireless communication network shown in FIG. 1 includes an access network, such as a radio access network (RAN), and a core network 110.

FIG. 1 shows user equipment (UE) 100, 102 configured to be in a wireless connection on one or more communication channels in a radio cell with a radio access network node (RAN node 1, 2) 104, 105 of an access network. The RAN node 104, 105 may be an evolved Node B (abbreviated as eNB or eNodeB) or a next generation Node B (abbreviated as gNB or gNodeB), providing the radio cell. The wireless connection (e.g., radio link) from a UE 100, 102 to the RAN node 104, 105 may be called uplink (UL) or reverse link, and the wireless connection (e.g., radio link) from the RAN node 104, 105 to the UE 100, 102 may be called downlink (DL) or forward link. A UE 100 may also communicate directly with another UE 102, and vice versa, via a wireless connection generally referred to as a sidelink (SL). It should be appreciated that the RAN node 104, 105 or its functionalities may be implemented by using any node, host, server or access point etc. entity suitable for providing such functionalities.

The access network may comprise more than one RAN node 104, 105, in which case the RAN nodes 104, 105 may also be configured to communicate with one another over links, wired or wireless. These links between RAN nodes 104, 105 may be used, for example, for sending and receiving control plane signaling and also for routing data such as measurements from one RAN node 104 to another RAN node 105.

A RAN node 104, 105 may comprise a computing device configured to control the radio resources of the RAN node. The RAN node may also be referred to as a base station, a base transceiver station (BTS), an access point, an access node, a radio access node, a cell site, or any other type of node capable of being in a wireless connection with a UE (e.g., UEs 100, 102). The RAN node may include or be coupled to transceivers. From the transceivers of the RAN node, a connection may be provided to an antenna unit that establishes bi-directional radio links to UEs 100, 102. The antenna unit may comprise an antenna or antenna element, or a plurality of antennas or antenna elements.

The RAN node 104, 105 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and a mobility management entity (MME). The 5GC may comprise network functions, such as a user plane function (UPF), an access and mobility management function (AMF), and a location management function (LMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device just to mention but a few names. The UE may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or any computing device comprising a wireless modem integrated in a vehicle.

The wireless communication network may also be able to support the usage of cloud services, for example at least part of core network operations may be carried out as a cloud service. The wireless communication network may also comprise a central control entity, or the like, providing facilities for wireless communication networks of different operators to cooperate for example in spectrum sharing.

5G enables using multiple input - multiple output (MIMO) antennas in the RAN node 104, 105 and/or the UE 100, 102, many more RAN nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine type applications, such as (massive) machine-type communications (mMTC), including vehicular safety, different sensors and real-time control.

In 5G wireless communication networks, RAN nodes and/or UEs may have multiple radio interfaces, namely below 6GHz, cmWave and mmWave, and also being integrable with existing legacy radio access technologies, such as the LTE. Integration with the LTE may be implemented, for example, as a system, where macro coverage may be provided by the LTE, and 5G radio interface access may come from small cells by aggregation to the LTE. In other words, a 5G wireless communication network may support both inter-RAT operability (such as LTE-5G) and inter-RI operability (inter-radio interface operability, such as below 6GHz - cmWave - mmWave). One of the concepts considered to be used in 5G wireless communication networks may be network slicing, in which multiple independent and dedicated virtual sub-networks (network instances) may be created within the substantially same infrastructure to run services that have different requirements on latency, reliability, throughput and mobility.

5G may enable analytics and knowledge generation to occur at the source of the data. This approach may involve leveraging resources that may not be continuously connected to a network, such as laptops, smartphones, tablets and sensors. Multi-access edge computing (MEC) may provide a distributed computing environment for application and service hosting. It may also have the ability to store and process content in close proximity to cellular subscribers for faster response time. Edge computing may cover a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

In some example embodiments, a RAN node 104, 105 may comprise: a radio unit (RU) comprising a radio transceiver (TRX), i.e., a transmitter (Tx) and a receiver (Rx); one or more distributed units (DUs) that may be used for the so-called Layer 1 (L1) processing and real-time Layer 2 (L2) processing; and a central unit (CU) (also known as a centralized unit) that may be used for non-real-time L2 and Layer 3 (L3) processing. The CU may be connected to the one or more DUs for example via an F1 interface. Such an embodiment of the access node may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU may be a logical node hosting radio resource control (RRC), service data adaptation protocol (SDAP) and/or packet data convergence protocol (PDCP), of the NR protocol stack for an access node. The DU may be a logical node hosting radio link control (RLC), medium access control (MAC) and/or physical (PHY) layers of the NR protocol stack for the access node. The operations of the DU may be at least partly controlled by the CU. It should also be understood that the distribution of functions between DU and CU may vary depending on implementation. The CU may comprise a control plane (CU-CP), which may be a logical node hosting the RRC and the control plane part of the PDCP protocol of the NR protocol stack for the access node. The CU may further comprise a user plane (CU-UP), which may be a logical node hosting the user plane part of the PDCP protocol and the SDAP protocol of the CU for the access node.

Cloud computing systems may also be used to provide the CU and/or DU. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the access network (e.g., RAN) by utilizing network function virtualization (NFV) and software defined networking (SDN). Using edge cloud may mean access node operations to be carried out, at least partly, in a computing system operationally coupled to a remote radio head (RRH) or a radio unit (RU) of an access node. It is also possible that access node operations may be performed on a distributed computing system or a cloud computing system located at the access node. Application of cloud RAN architecture enables RAN real-time functions being carried out at the access network (e.g., in a DU) and non-real-time functions being carried out in a centralized manner (e.g., in a CU).

It should also be understood that the distribution of functions between core network operations and access node operations may differ in future wireless communication networks compared to that of the LTE or 5G, or even be non-existent. Some other technology advancements that may be used include big data and all-IP, which may change the way wireless communication networks are being constructed and managed. 5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network, enabling more extensive network coverage. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay access node or by a RAN node 104, 105 located on-ground or in a satellite.

It is obvious for a person skilled in the art that the RAN nodes 104, 105 depicted in FIG. 1 are just an example of a part of an access network (e.g., a radio access network) and in practice, the access network may comprise more than two RAN nodes, the UEs 100, 102 may have access to a plurality of radio cells, and the access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of an access network (e.g., a radio access network), a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The RAN nodes 104, 105 of FIG. 1 may provide any kind of these cells. A cellular radio network may be implemented as a multilayer access networks including several kinds of radio cells. In multilayer access networks, one RAN node may provide one kind of a radio cell or radio cells, and thus a plurality of RAN nodes may be needed to provide such a multilayer access network.

For fulfilling the need for improving performance of access networks, the concept of "plug-and-play" RAN nodes may be introduced. An access network which may be able to use "plug-and-play" RAN nodes, may include, in addition to Home eNodeBs or Home gNodeBs, a Home Node B gateway, or HNB-GW (not shown in FIG. 1). An HNB-GW, which may be installed within an operator's access network, may aggregate traffic from a large number of Home eNodeBs or Home gNodeBs back to a core network of the operator.

To meet the 5G network requirements of performance and the demands of the unprecedented growth of the mobile subscribers, millions of RAN nodes (i.e., base stations) are being deployed. Such rapid growth brings the issues of optimizing the network. Artificial intelligence (AI) or machine learning (ML) techniques may be utilized to automate the optimization. For example, AI or ML may be used for the following RAN use cases: network energy saving, load balancing, and/or mobility optimization.

AI or ML based prediction may enable improved performance. For example, prediction of UE trajectory or future location may be useful to adjust handover thresholds, such as the cell individual offset or to select the RAN-based notification area (RNA) in RRC inactive mode. Prediction of UE location may further help network resource allocation for various use cases including energy saving, load balancing and mobility management. As another example, handover decisions may be improved by using prediction information on the UE performance at the target cell. Energy saving decisions taken locally at a cell may be improved by utilizing prediction information on incoming UE traffic, as well as prediction information about traffic that may be offloaded from a candidate energy saving cell to a neighbor cell ensuring coverage.

FIG. 2 illustrates the functional framework for RAN intelligence.

Referring to FIG. 2, the data collection function 201 is a function that provides training data to the model training function 202, and inference data to the model inference function 203. AI or ML algorithm specific data preparation (e.g., data pre-processing and cleaning, formatting, and transformation) may not be carried out at the data collection function 201.

Some examples of the training data or inference data may include measurements from UEs or different network entities, feedback from the actor 204, and/or output from an AI or ML model.

The training data refers to the data used as input for the AI or ML model training function 202.

The inference data refers to the data used as input for the AI or ML model inference function 203.

The model training function 202 is a function that performs the AI or ML model training, validation, and testing which may generate model performance metrics as part of the model testing procedure. The model training function 202 may also be responsible for data preparation (e.g., data pre-processing and cleaning, formatting, and transformation) based on the training data delivered by the data collection function 201, if required.

Model deployment or update may be used to initially deploy a trained, validated, and tested AI or ML model to the model inference function 203 or to deliver an updated model to the model inference function 203.

The model inference function 203 is a function that provides AI or ML model inference output (e.g., predictions or decisions). The model inference function 203 may provide model performance feedback to the model training function 202, when applicable. The model inference function 203 may also be responsible for data preparation (e.g., data pre-processing and cleaning, formatting, and transformation) based on the inference data delivered by the data collection function 201, if required. The inference output of the AI or ML model is produced as the output of the model inference function 203. The inference output may be use case specific. Model performance feedback from the model inference function 203 may be used for monitoring the performance of the AI or ML model, when available.

The actor 204 is a function that receives the output from the model inference function 203 and triggers or performs corresponding actions. The actor 204 may trigger actions directed to other entities or to itself.

The actor 204 may provide feedback information that may be used to derive the training data, the inference data or to monitor the performance of the AI or ML model and its impact to the network through updating of key performance indicators (KPIs) and performance counters.

Based on the location of the model training function 202 and the model inference function 203, at least the following two options are possible. In the first option, the model training function 202 may be located in the operations, administration, and maintenance (OAM) functions, and the model inference function 203 may be located in a RAN node 104, 105 (e.g., gNB). In the second option, the model training function 202 and the model inference function 203 may both be located in a RAN node 104, 105 (e.g., gNB). For example, the OAM functions may be located in the core network 110 or in a centralized management system.

RAN is a distributed architecture. RAN nodes (e.g., gNBs) may be able to execute different ML models at different points in time. This implies that the availability of certain predictions is dependent on the trained models available at a given RAN node. Even though different RAN nodes may have different ML models available, it is possible that network conditions change and one or more of these models requires retraining. During the retraining, the RAN node is not able to provide predictions corresponding to this ML model to its neighboring RAN nodes. As another example, unavailability of a prediction may also be due to overload experienced by the RAN node, which makes it incapable to calculate a predicted value.

In some cases, the RAN node requesting predictions may be interested in receiving those predictions only if all the requested predictions can be provided. This may be the case, if, for example, all of the requested predictions need to be provided as input to an ML model present at the RAN node receiving the predictions (e.g., for model training or for model inference purposes).

However, in some other scenarios, it may not be necessary for all the requested measurements to be received. This could be the case, if, for example, a RAN node only requests a prediction (e.g., related to a predicted load) to monitor the behavior of a neighboring RAN node.

In addition, AI or ML functions may also require a source node to request, from a neighboring RAN node, UE performance feedback related to UEs being handed over from the source node to the target node in order to evaluate the handover behavior and performance. Several types of UE performance feedback may be requested, including (but not limited to): uplink and downlink throughput, packet delay, packet error rate, quality of experience (QoE) performance, to name a few.

In some cases, UE performance feedback may not be a necessary type of feedback for an AI or ML algorithm. In some other cases, a source node may need to obtain at least one type of UE performance information to fine-tune its ML algorithm. Other algorithms may require more than one type of UE performance feedback. This requirement may involve certain UEs or certain UE categories or certain types of handovers (e.g., related to certain AI or ML use cases). For example, it is possible that for one AI or ML algorithm only the throughput UE performance feedback is needed, while for some other both the throughput and delay UE performance feedback may be necessary for performance monitoring.

Besides predictions and UE performance feedback after a handover, neighbor node measurements may be needed by a RAN node to train or execute an AI or ML model. When the RAN node requests those measurements (e.g., measurements related to load values), it may need to successfully receive all the requested values. This may be the case, for example, when the RAN node needs to execute model inference using those measurements as the input. This may also be the case, when the RAN node needs to use the information as part of the ground truth related to a prediction to evaluate the accuracy of a prediction obtained by a neighboring RAN node. If, for example, a neighboring RAN node provided a prediction at a certain point in time (e.g., a predicted load at time t), then the RAN node may need to receive the ground truth corresponding to this prediction at the same point in time (e.g., actual load at time t), when the prediction was made.

Executing AI or ML algorithms may increase the processing load of a RAN node. Therefore, the RAN node may sometimes need to prioritize among the measurements or prediction requests received from its neighboring RAN nodes, in case it is not able to satisfy them all. If, for example, the RAN node receives two requests from two different neighboring RAN nodes, but it can only serve one of them, it may be beneficial if the RAN node is provided with assistance information on the priority of the request to help it determine which of the two neighboring RAN nodes to serve.

Therefore, in one solution, a first RAN node requesting predictions from a second RAN node may include, in the request message, a partial success indicator information element (IE), which may indicate whether partial success is allowed or not.

If the partial success indicator IE is set to "partial success not allowed" in the request message, and any of the requested data cannot be provided, then the second RAN node may send a failure message to the first RAN node with an appropriate cause value.

If the partial success indicator IE is set to "partial success allowed" in the request message, and none of the requested data can be provided, then the second RAN node may send a failure message to the first RAN node with an appropriate cause value.

If the second RAN node is capable of providing some but not all of the requested data, and the partial success indicator IE is set to "partial success allowed", then the second RAN node may initiate the data reporting for the admitted measurement objects and include the appropriate measurement initiation result IE in the response message.

In the response message, the second RAN node may indicate the measurements that were initiated successfully and the measurements that could not be initiated successfully, as well as an associated cause value.

The partial success indicator may be binary over the requested measurements. The purpose of this partial success indicator is that if a RAN node requesting measurements really needs to receive all the requested measurements, then it can turn the partial success indicator to "partial success not allowed". In this case, if the RAN node receiving the request can only provide some of the predictions (but not all), then it may send a failure message.

However, the partial success indicator is inflexible and it cannot indicate that only some measurements among the requested measurements are really needed by the requesting node, while others are only optional. For example, if the partial success is allowed and the reporting node cannot provide one of the required measurements, then the requesting RAN node may need to cancel the procedure.

Some example embodiments may provide more flexibility for requesting the measurements from another RAN node. Some example embodiments are described below using principles and terminology of 5G radio access technology without limiting the example embodiments to 5G radio access technology, however.

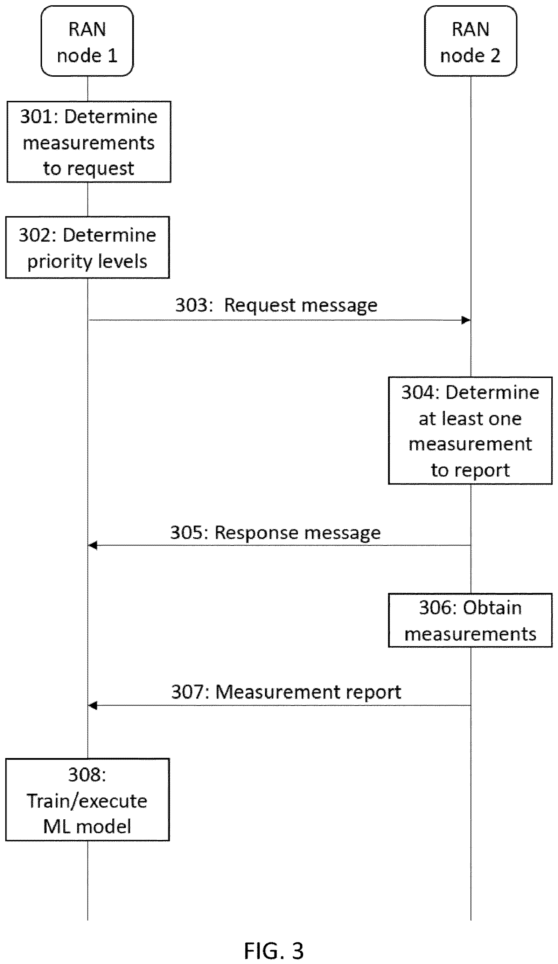

FIG. 3 illustrates a signal flow diagram according to an example embodiment. Although two RAN nodes are shown in the example of FIG. 3, it should be noted that the number of RAN nodes may be more than two. Generally, there may be two or more RAN nodes involved in the signaling. In addition, the signaling procedure illustrated in FIG. 3 may be extended and applied according to the actual number of RAN nodes.

Referring to FIG. 3, at 301, a first RAN node (RAN node 1) determines one or more measurements to request from a second RAN node (RAN node 2). The first RAN node may correspond to the first RAN node 104 of FIG. 1. The second RAN node may correspond to the second RAN node 105 of FIG. 1.

The one or more measurements may comprise at least one or more mandatory measurements. The one or more measurements may further comprise one or more optional measurements. The one or more mandatory measurements and the one or more optional measurements may be associated with at least one of: the second RAN node or at least one user device (i.e., UE).

One example of a mandatory measurement may be end user throughput performance measurement associated with the at least one user device. For example, the first RAN node may need this measurement for training or executing inference of a machine learning model configured for mobility optimization. In this case, the one or more optional measurements may comprise, for example, at least one of: packet loss ratio and/or packet delay associated with the at least one user device.

Another example of a mandatory measurement may be predicted radio resource status of the second RAN node. In this case, the one or more optional measurements may comprise, for example, predicted number of active UEs.

At 302, the first RAN node may determine, or assign, a priority level per a measurement of the one or more measurements. Alternatively, the priority levels may be configured by another entity, such as OAM. Alternatively, the priority levels may be predetermined values hardcoded at the standard.

At 303, the first RAN node transmits, to the second RAN node, a request message, for example an INFORMATION REQUEST message via Xn interface, for requesting the one or more measurements determined to be requested by the first RAN node, wherein the request message comprises priority information indicating a priority level per a measurement of the one or more measurements (as determined at 302). In case the one or more measurements comprise one or more mandatory measurements and one or more optional measurements, then the priority information may comprise a priority level per a measurement of the one or more mandatory measurements and the one or more optional measurements. The second RAN node receives the request message.

In one example, the request message may indicate one or more mandatory measurements and/or one or more optional measurements requested by the first RAN node from the second RAN node. In other words, when the first RAN node is requesting measurements from the second RAN node, an indicator may be used to indicate that a subset of those measurements are mandatory measurements, and another indicator may be used to indicate that the rest of the measurements are optional. The second RAN node receiving the request may be required to provide at least the mandatory measurements. Otherwise, if at least one mandatory measurement is not possible to be provided, the second RAN node may respond with a failure message. In case the second RAN node is not able to provide some or all of the optional measurements, but it is able to provide all of the mandatory measurements, then it may report the available measurements without declaring an error or failure to the first RAN node.

In the priority information, the requested measurements (whether being optional or mandatory) may be assigned a priority level. The mandatory measurements may have the highest priority level(s). Optional measurements may have lower priority levels than the mandatory measurements. The list in which optional measurements are requested may be in decreasing priority order, such that the first requested optional measurement has the highest priority level. As another alternative, the list of optional measurements may be in increasing priority order, such that the last requested optional measurement has the highest priority level.

For example, the priority information may indicate a priority level threshold for distinguishing between the one or more mandatory measurements and the one or more optional measurements. As a non-limiting example, if the priority level threshold is 5, then the measurements with a priority level between 1 and 5 may be considered as mandatory measurements, while measurements with a priority level above 5 may be considered as optional measurements.

In another example, the first RAN node may only indicate the one or more mandatory measurements in the request message. In other words, in this case, no optional measurements may be indicated in the request message.

In another example, the first RAN node may indicate the one or more mandatory measurements in the request message, and the request message may also include an indication that the second RAN node may also report any other measurements that it may possibly calculate. In this way, the optional measurements may be requested implicitly from the second RAN node. As an example, the first RAN node may request to receive predicted radio resource status as a mandatory measurement from the second RAN node with an indication that other optional measurements may also be provided, if supported by the second RAN node. In this case, the second RAN node may provide, for example, the mandatory measurement and at least one of the following optional measurements: predicted radio resource status, predicted number of active UEs, and/or predicted RRC connections.

In summary, the second RAN node has to provide at least all the measurements indicated as mandatory and, if possible, the implicitly or explicitly indicated optional measurements.

At 304, based on the priority information received from the first RAN node, the second RAN node determines or selects at least one measurement to report to the first RAN node. The at least one measurement to report may have a higher priority level than a priority level of the other requested measurements (in case not all of the requested measurements can be provided).

For example, if the request message comprises a list of mandatory measurements and a list of optional measurements, then the second RAN node may interpret the information in the request message into a prioritization in such a way that all the measurements from the list of mandatory measurements are assigned with the highest priority level(s), while the measurements from the list of optional measurements are assigned with lower priority levels than the ones from the list of mandatory measurements. At least the mandatory measurements, having the highest priority, may be required to be provided from the second RAN node.

The second RAN node may evaluate, based on its current conditions, its ability to provide the requested mandatory and optional measurements.

If the second RAN node is able to provide all the mandatory measurements requested by the first RAN node, then, among the requested optional measurements, the second RAN node may try to provide at least the optional measurements that have the highest priority in the list of optional measurements (e.g., the first optional measurement in the list in case of a decreasing priority order).

If the second RAN node is able to provide all the optional measurements, it may provide the complete list of optional measurements in its response message to the first RAN node together with the complete list of mandatory measurements. In other words, in this case, the second RAN node may report all the requested measurements.

If the second RAN node can only provide some, but not all, of the optional measurements in addition to the mandatory measurements, then the second RAN node may send an indication to the first RAN node to confirm the set of measurements that the second RAN node can provide. The second RAN node may also indicate which optional measurements it is not able to provide, for example in a failure list of the response message. In this case, no error or failure indication may be indicated from the second RAN node to the respective RAN node. For example, the second RAN node may indicate, in the response message, the optional measurements that it can provide, and/or the optional measurements that it cannot provide. In other words, in this case, the second RAN node may report all the mandatory measurements and a subset of the optional measurements.

If the second RAN node cannot provide at least one of the requested mandatory measurements to the first RAN node, then the second RAN node may send a failure message, for example an INFORMATION FAILURE message via the Xn interface, to the first RAN node. In other words, even if the second RAN node could provide some, but not all, of the mandatory measurements, it may still reply with a failure message.

At 305, the second RAN node transmits, to the first RAN node, a response message, for example an INFORMATION RESPONSE message or an INFORMATION FAILURE message via the Xn interface, indicating whether or not at least one of the one or more measurements requested by the first RAN node can be provided from the second RAN node. The first RAN node receives the response message.

For example, the response message may indicate that all the requested measurements will be provided. In this case, the first RAN node will expect to receive all the requested measurements.

As another example, the response message may comprise at least a first list indicating a first subset (e.g., the one or more mandatory measurements) of the one or more measurements requested by the first RAN node to be provided from the second RAN node. In this case, the first RAN node will expect to receive at least the first subset.

As another example, the first response message may comprise a first list indicating a first subset (e.g., the one or more mandatory measurements) of the one or more measurements to be provided from the second RAN node, and a second list (failure list) indicating a second subset (e.g., the one or more optional measurements) of the one or more measurements not to be provided from the second RAN node. In other words, the second subset in the failure list will not be part of the measurement report. In this case, the first subset may have a higher priority level than a priority level of the second subset.

For example, in case the one or more measurements comprise one or more mandatory measurements and one or more optional measurements, then the first subset to be provided may include at least one or all of the one or more mandatory measurements requested by the first RAN node. The second subset not to be provided may include at least one or all of the one or more optional measurements requested by the first RAN node.

Alternatively, if the second RAN node cannot provide at least one of the one or more mandatory measurements requested by the first RAN node, then the first response message may be a failure message indicating that the one or more measurements cannot be provided. For example, the failure message may be an AIML INFORMATION FAILURE message indicating that the requested measurement monitoring with all mandatory measurements is not possible. In this case, the first RAN node interprets the failure message such that no measurement reporting will be provided from the second RAN node.

At 306, the second RAN node obtains the at least one measurement that it determined to report to the first RAN node, if it is able to do so. For example, the second RAN node may obtain at least the first subset (e.g., the one or more mandatory measurements) of the one or more measurements requested by the first RAN node.

At 307, based on the configured type of reporting (e.g., on demand, event based or periodic), the second RAN node reports the at least one measurement to the first RAN node for example per UE or per cell, in case the second RAN node indicated in the response message that it is able to provide the at least one measurement. The first RAN node receives the at least one measurement.

For example, the second RAN node may transmit, to the first RAN node, at least the first subset (e.g., the one or more mandatory measurements) of the one or more measurements requested by the first RAN node. For example, the measurements may be transmitted in an INFORMATION UPDATE message via the Xn interface.

At 308, the first RAN node may provide the at least one measurement (e.g., at least the one or more mandatory measurements) as input information for training or executing a machine learning model configured for mobility optimization or network energy saving, for example.

For example, the one or more mandatory measurements requested by the first RAN node may comprise measurements that are needed by the first RAN node to train the machine learning model or for executing a certain model inference. For example, the one or more mandatory measurements may represent measurements that are all essential for the performance of the machine learning model inference monitoring or execution.

As another example, the one or more mandatory measurements may comprise measurements that are needed by the first RAN node to monitor performance either on UE level or on cell level, if performance based on all the requested mandatory measurements is needed to be monitored by an AI or ML algorithm.

As another example, the one or more mandatory measurements may comprise measurements that are needed by the first RAN node to provide event-based or periodic reporting on demand.

The one or more optional measurements requested by the first RAN node may comprise measurements that the first RAN node may consider useful for example for: monitoring performance of an AI or ML model at a neighboring RAN node, or monitoring behavior of a neighboring RAN node (e.g., with respect to a certain load). In other words, the one or more optional measurements may represent measurements that are not mandatory for the performance of an AI or ML model inference or training.

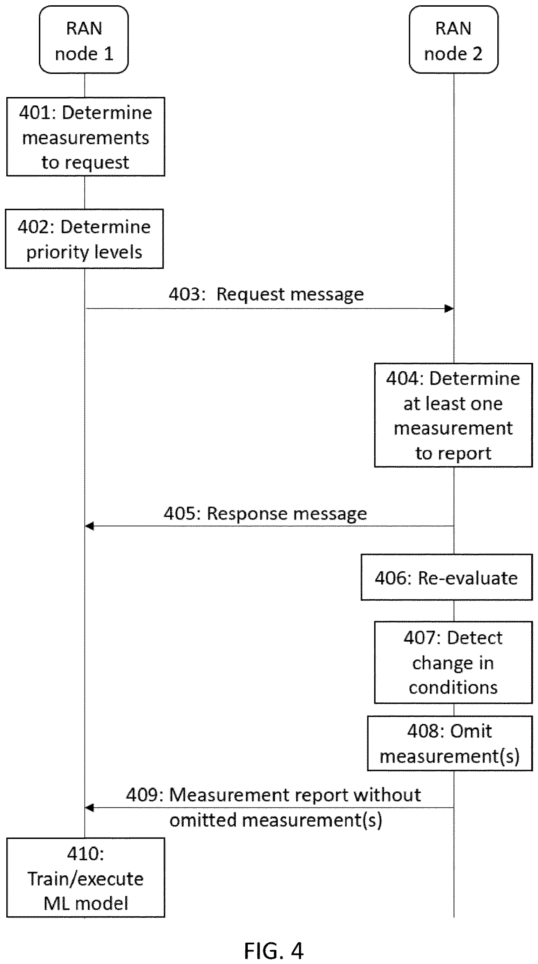

FIG. 4 illustrates a signal flow diagram according to an example embodiment. Although two RAN nodes are shown in the example of FIG. 4, it should be noted that the number of RAN nodes may also be more than two. Generally, there may be two or more RAN nodes involved in the signaling. In addition, the signaling procedure illustrated in FIG. 4 may be extended and applied according to the actual number of RAN nodes.

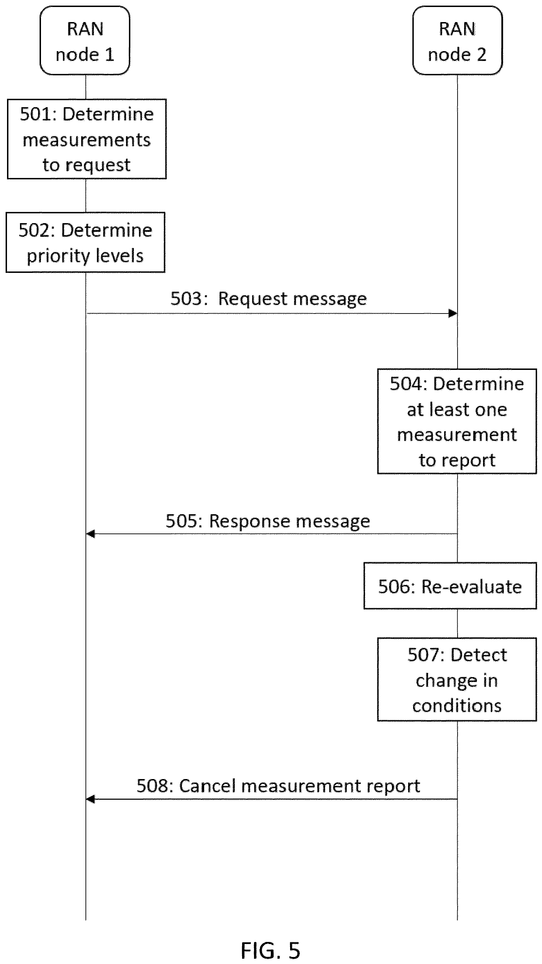

Even though the second RAN node may send a response message to confirm its capability to provide the requested measurements to the requesting RAN node (e.g., RAN node 1) for a given time period, it is possible that the conditions in the second RAN node change in the meantime. Thus, the second RAN node may not be capable to continue providing the requested measurements. Therefore, even though the second RAN node may originally confirm that it will provide the measurements to the first RAN node, the second RAN node may later on determine (e.g., due to an overload) that it is not possible to provide the measurements. In this case, the second RAN node may cancel (see FIG. 5) the reporting for example by sending an INFORMATION CANCEL message (via Xn interface) to the first RAN node. As another option, the second RAN node may cancel or omit (see FIG. 4) optional measurements that have the lowest priority levels, but the second RAN node may still provide at least the mandatory measurements and possibly also some optional measurements with the higher priority level among the optional measurements. In this case, information related to a threshold value of priority level to determine the higher priority level may be transmitted via the request message, or the threshold value may be a predetermined value.

Referring to FIG. 4, at 401, a first RAN node (RAN node 1) determines one or more measurements to be requested from a second RAN node (RAN node 2), as described above at 301.

At 402, the first RAN node may determine, or assign, a priority level per a measurement of the one or more measurements, as described above at 302. Alternatively, the priority levels may be configured by another entity, such as OAM. Alternatively, the priority levels may be predetermined values hardcoded at the standard.

At 403, the first RAN node transmits, to the second RAN node, a request message, for example the INFORMATION REQUEST message, for requesting the one or more measurements determined to be requested by the first RAN node, wherein the request message comprises priority information indicating a priority level per a measurement of the one or more measurements, as described above at 303.

At 404, based on the priority information received from the first RAN node, the second RAN node determines or selects at least one measurement to report to the first RAN node, as described above at 304.

At 405, the second RAN node transmits, to the first RAN node, a response message, for example an INFORMATION RESPONSE message indicating that the one or more mandatory measurements and at least a subset of the optional measurements requested by the first RAN node can be provided from the second RAN node. The first RAN node receives the response message.

At 406, the second RAN node re-evaluates, for example with some periodicity, the current conditions for event or periodical based measurement reporting.

At 407, based on the re-evaluation, the second RAN node detects a change in one or more conditions of the second RAN node. For example, the second RAN node may detect that the second radio access network node is overloaded.

At 408, based on detecting the change, the second RAN node determines at least one optional measurement to be omitted from the measurements that it promised to provide in the response message. For example, based on the priority levels, the second RAN node may remove one or more optional measurements from the measurement report.

At 409, the second RAN node transmits, to the first RAN node, a measurement report, for example an INFORMATION UPDATE message, comprising at least the one or more mandatory measurements, and possibly also some optional measurement(s) that were not omitted. The measurement report may also include an indication, such as a failure list, indicating that the at least one omitted optional measurement cannot be provided to the first RAN node.

At 410, the first RAN node may provide at least the one or more mandatory measurements, as well as the possibly received optional measurements, as input information for training or executing a machine learning model configured for mobility optimization or network energy saving, for example.

FIG. 5 illustrates a signal flow diagram according to an example embodiment. Although two RAN nodes are shown in the example of FIG. 5, it should be noted that the number of RAN nodes may also be more than two. Generally, there may be two or more RAN nodes involved in the signaling. In addition, the signaling procedure illustrated in FIG. 5 may be extended and applied according to the actual number of RAN nodes.

Referring to FIG. 5, at 501, a first RAN node (RAN node 1) determines one or more measurements to request from a second RAN node (RAN node 2), as described above at 301.

At 502, the first RAN node may determine, or assign, a priority level per a measurement of the one or more measurements, as described above at 302. Alternatively, the priority levels may be configured by another entity, such as OAM. Alternatively, the priority levels may be predetermined values hardcoded at the standard.

At 503, the first RAN node transmits, to the second RAN node, a request message, for example an INFORMATION REQUEST message, for requesting the one or more measurements determined to be requested by the first RAN node, wherein the request message comprises priority information indicating a priority level per a measurement of the one or more measurements, as described above at 303.

At 504, based on the priority information received from the first RAN node, the second RAN node determines or selects at least one measurement to report to the first RAN node, as described above at 304.

At 505, the second RAN node transmits, to the first RAN node, a response message, for example an INFORMATION RESPONSE message indicating that at least one (e.g., at least the one or more mandatory measurements) of the one or more measurements requested by the first RAN node can be provided from the second RAN node. The first RAN node receives the response message.

At 506, the second RAN node re-evaluates, for example with some periodicity, the current conditions for event or periodical based measurement reporting.

At 507, based on the re-evaluation, the second RAN node detects a change in one or more conditions of the second RAN node. For example, the second RAN node may detect that the second RAN node is overloaded. Based on detecting the change, the second RAN node determines that it cannot provide at least one mandatory measurement of the one or more mandatory measurements requested by the first RAN node, and thus the second RAN node decides to cancel the measurement reporting.

At 508, the second RAN node transmits, to the first RAN node, an indication, for example an INFORMATION CANCEL message, indicating that it cannot provide any of the requested one or more measurements to the first RAN node. Upon receiving the indication, the first RAN node considers that the measurement reporting has been cancelled.

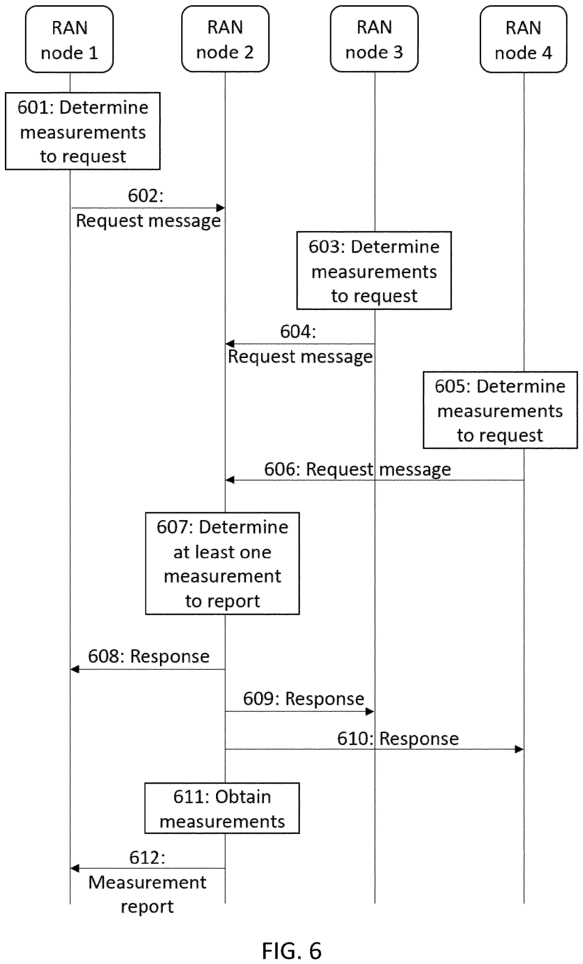

FIG. 6 illustrates a signal flow diagram according to an example embodiment. Although four RAN nodes are shown in the example of FIG. 6, it should be noted that the number of RAN nodes may also be different than four. Generally, there may be two or more RAN nodes involved in the signaling. In addition, the signaling procedure illustrated in FIG. 6 may be extended and applied according to the actual number of RAN nodes.

Referring to FIG. 6, at 601, a first RAN node (RAN node 1) determines one or more measurements to be requested from a second RAN node (RAN node 2). The first RAN node may correspond to the first RAN node 104 of FIG. 1. The second RAN node may correspond to the second RAN node 105 of FIG. 1.

The first RAN node may also determine, or assign, a priority level per a measurement of the one or more measurements. Alternatively, the priority levels may be configured by another entity, such as OAM or be predetermined values.

The one or more measurements requested by the first RAN node may comprise at least one or more mandatory measurements. The one or more measurements may also comprise one or more optional measurements. The one or more mandatory measurements and the one or more optional measurements may be associated with at least one of: the second RAN node or at least one user device (i.e., UE).

At 602, the first RAN node transmits, to the second RAN node, a first request message, for example an INFORMATION REQUEST message, for requesting the one or more measurements to request by the first RAN node, wherein the first request message comprises priority information indicating a priority level per a measurement of the one or more measurements. Some example of the contents of the first request message are described above with reference to FIG. 3. The second RAN node receives the first request message.

At 603, a third RAN node (RAN node 3) determines one or more measurements to be requested from the second RAN node.

The third RAN node may also determine, or assign, a priority level per a measurement of the one or more measurements. Alternatively, the priority levels may be configured by another entity, such as OAM.

For example, the one or more measurements determined by the third RAN node may comprise one or more mandatory measurements and one or more optional measurements. The one or more mandatory measurements and the one or more optional measurements may be associated with at least one of: the second RAN node or at least one user device (i.e., UE).

At 604, the third RAN node transmits, to the second RAN node, a second request message, for example an INFORMATION REQUEST message, for requesting the one or more measurements determined to be requested by the third RAN node, wherein the second request message comprises priority information indicating a priority level per a measurement of the one or more measurements. The second RAN node receives the second request message.

The one or more measurements requested by the third RAN node may be the same or different than the one or more measurements requested by the first RAN node. For example, some of the measurements requested by the third RAN node may be the same as some of the measurements requested by the first RAN node, while the other measurements requested by the third RAN node may be different than the other measurements requested by the first RAN node. Alternatively, all of the measurements requested by the third RAN node may be different than the measurements requested by the first RAN node.

At 605, a fourth RAN node (RAN node 4) determines one or more measurements to be requested from the second RAN node.

For example, the one or more measurements requested by the fourth RAN node may comprise one or more mandatory measurements and one or more optional measurements. The one or more mandatory measurements and the one or more optional measurements may be associated with at least one of: the second RAN node or at least one user device (i.e., UE).

The fourth RAN node may also determine, or assign, a priority level per a measurement of the one or more measurements. Alternatively, the priority levels may be configured by another entity, such as OAM.

At 606, the fourth RAN node transmits, to the second RAN node, a third request message, for example an INFORMATION REQUEST message, for requesting the one or more measurements determined to be requested by the fourth RAN node, wherein the third request message comprises priority information indicating a priority level per a measurement of the one or more measurements. The second RAN node receives the third request message.

The one or more measurements requested by the fourth RAN node may be the same or different than the one or more measurements requested by the first RAN node and the third RAN node.

At 607, based on the priority information received from the first RAN node, the third RAN node, and the fourth RAN node, the second RAN node determines or selects at least one measurement to report to at least one of: the first RAN node, the third RAN node, or the fourth RAN node. The at least one measurement to report may have a higher priority level than a priority level of the other requested measurements, in case the second RAN node cannot provide all the measurements.

In case the second RAN node receives request messages from more than one RAN node (e.g., as shown in FIG. 6), the second RAN node may interpret the information into a prioritization from all the requesting RAN nodes. Thus, with the priority levels, the second RAN node may evaluate the urgency for reporting need between the requesting RAN nodes. The second RAN node may evaluate, based on its current conditions, its ability to provide the requested mandatory and optional measurements.

In case the second RAN node cannot provide all the mandatory measurements to all requesting RAN nodes, but the second RAN node has capacity for reporting the mandatory measurements requested by at least one of the requesting RAN nodes, the second RAN node may select one or more requesting RAN nodes (e.g., the first RAN node) with a higher priority of mandatory measurements. In this case, the second RAN node may send a failure message to the other requesting RAN nodes (e.g., the third RAN node and the fourth RAN node), to which the second RAN node is not able to provide the mandatory measurements requested by those nodes. This principle is demonstrated in the following non-limiting examples.

As a non-limiting example, the first request message received from the first RAN node may indicate the following list of requested measurements: measurement 1 with priority level set to 1, measurement 2 with priority level set to 1, measurement 3 with priority level set to 10, and measurement 4 with priority level set to 20.

In this example, priority level 1 represents the highest priority. For example, measurements with a priority level between 1 and 5 may be considered as mandatory measurements, while measurements with a priority level above 5 may be considered as optional measurements.

As a non-limiting example, the second request message received from the third RAN node may indicate the following list of requested measurements: measurement 1 with priority level set to 3, measurement 2 with priority level set to 3, measurement 3 with priority level set to 15, and measurement 4 with priority level set to 25.

As a non-limiting example, the third request message received from the fourth RAN node may indicate the following list of requested measurements: measurement 1 with priority level set to 5, measurement 2 with priority level set to 5, measurement 3 with priority level set to 30, measurement 4 with priority level set to 40.

The second RAN node may first determine its capability for reporting the mandatory measurements for each requesting RAN node. As an example, let us assume that the second RAN node does not have capacity for reporting all the mandatory measurements to all of the requesting RAN node, but the second RAN node only has capacity for reporting four mandatory measurements. In this case, the second RAN node may select the four mandatory measurements based on the priority levels as follows: measurement 1 requested by the first RAN node (priority level 1), measurement 2 requested by the first RAN node (priority level 1), measurement 1 requested by the third RAN node (priority level 3), and measurement 2 requested by the third RAN node (priority level 3). In this example, the second RAN node may send, to the first RAN node and the third RAN node, a failure list indicating the requested optional measurements that the second RAN node is not able to provide. In this example, the second RAN node may transmit a failure message to the fourth RAN node, since the second RAN node is not able to provide any of the measurements requested by the fourth RAN node.

In case the second RAN node can provide all mandatory measurements to all requesting RAN nodes, but has a limited capability to report the optional measurements, then the second RAN node may select the optional measurements in decreasing priority order by selecting the optional measurements with highest priority first. For each requesting RAN node, for which not all optional measurements can be reported, the second RAN node may list the optional measurements that cannot be provided in a failure list of the respective response message.

For example, let us assume that the second RAN node has capacity for reporting all the mandatory measurements to all the requesting RAN nodes, but the second RAN node only has capacity for reporting three optional measurements. In this case, the second RAN node may select the three optional measurements to report based on the priority levels as follows: measurement 3 requested by the first RAN node (priority level 10), measurement 3 requested by the third RAN node (priority level 15), and measurement 4 requested by the first RAN node (priority level 20). In this case, the second RAN node may report all the measurements requested by the first RAN node, the mandatory measurements and some of the optional measurements requested by the third RAN node, and the mandatory measurements but none of the optional measurements requested by the fourth RAN node. The second RAN node may send, to the third RAN node and the fourth RAN node, a failure list indicating the requested optional measurements that the second RAN node is not able to provide.

At 608, the second RAN node transmits, to the first RAN node, a first response message, for example an INFORMATION RESPONSE message or an INFORMATION FAILURE message, indicating whether or not at least one of the one or more measurements requested by the first RAN node can be provided from the second RAN node. The first RAN node receives the first response message.

For example, the first response message may comprise at least a first list indicating a first subset of the one or more measurements requested by the first RAN node to be provided from the second RAN node.

As another example, the first response message may comprise a first list indicating a first subset of the one or more measurements requested by the first RAN node to be provided from the second RAN node, and a second list indicating a second subset of the one or more measurements requested by the first RAN node not to be provided from the second RAN node. In this case, the first subset may have a higher priority level than a priority level of the second subset.

For example, in case the one or more measurements comprise one or more mandatory measurements and one or more optional measurements, then the first subset to be provided may include at least one or all of the one or more mandatory measurements requested by the first RAN node. The second subset not to be provided may include at least one or all of the one or more optional measurements requested by the first RAN node.

Alternatively, if the second RAN node cannot provide at least one of the one or more mandatory measurements requested by the first RAN node, then the first response message may be a failure message indicating that the one or more measurements cannot be provided.

At 609, the second RAN node transmits, to the third RAN node, a second response message, for example an INFORMATION RESPONSE message or an INFORMATION FAILURE message, indicating whether or not at least one of the one or more measurements requested by the third RAN node can be provided from the second RAN node. The third RAN node receives the second response message.

For example, the second response message may comprise at least a third list indicating a third subset of the one or more measurements requested by the third RAN node to be provided from the second RAN node.

As another example, the second response message may comprise a third list indicating a third subset of the one or more measurements requested by the third RAN node to be provided from the second RAN node, and a fourth list indicating a fourth subset of the one or more measurements requested by the third RAN node not to be provided from the second RAN node. In this case, the third subset may have a higher priority level than a priority level of the fourth subset.

For example, in case the one or more measurements comprise one or more mandatory measurements and one or more optional measurements, then the third subset to be provided may include at least one or all of the one or more mandatory measurements requested by the third RAN node. The fourth subset not to be provided may include at least one or all of the one or more optional measurements requested by the fourth RAN node.

If the second RAN node cannot provide at least one of the one or more mandatory measurements requested by the third RAN node, then the second response message may be a failure message indicating that the one or more measurements cannot be provided.

At 610, the second RAN node transmits, to the fourth RAN node, a third response message, for example an INFORMATION RESPONSE message or an INFORMATION FAILURE message, indicating whether or not at least one of the one or more measurements requested by the fourth RAN node can be provided from the second RAN node. The fourth RAN node receives the third response message.

If the second RAN node cannot provide at least one of the one or more mandatory measurements requested by the fourth RAN node, then the third response message may be a failure message indicating that the one or more measurements cannot be provided.

At 611, the second RAN node obtains the at least one measurement that it determined to report at 607. For example, the second RAN node may obtain at least the first subset (e.g., the one or more mandatory measurements) of the one or more measurements requested by the first RAN node.

At 612, based on the configured type of reporting (e.g., on demand, event based or periodic), the second RAN node reports the at least one measurement to the first RAN node. The first RAN node receives the at least one measurement.

For example, the second RAN node may transmit, to the first RAN node, at least the first subset (e.g., the one or more mandatory measurements) of the one or more measurements requested by the first RAN node. For example, the measurements may be transmitted in an INFORMATION UPDATE message.

The first RAN node may provide the at least one measurement (e.g., at least the one or more mandatory measurements) as input information for training or executing a machine learning model configured for mobility optimization or network energy saving, for example.

Herein the terms "first RAN node", "second RAN node", "third RAN node", and "fourth RAN node" are used to distinguish the RAN nodes, and they do not necessarily mean a specific order or specific identifiers of the RAN nodes.

The messages used in FIGS. 4 to 6, such as the INFORMATION REQUEST message, the INFORMATION RESPONSE message, the INFORMATION FAILURE message, INFORMATION CANCEL message and the INFORMATION UPDATE message may be transmitted or received via the Xn interface.

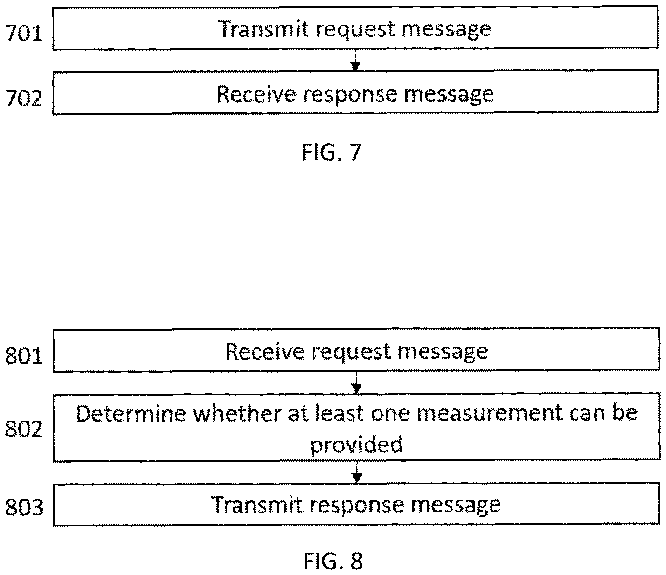

FIG. 7 illustrates a flow chart according to an example embodiment of a method performed by an apparatus 1100 of a first radio access network node 104. For example, the apparatus 1100 may comprise, or be comprised in, the first radio access network node 104.

Referring to FIG. 7, in block 701, the apparatus transmits, to a second radio access network node, a request message for requesting one or more measurements, wherein the request message comprises priority information indicating a priority level per a measurement of the one or more measurements.

In block 702, the apparatus receives, from the second radio access network node, a response message indicating whether or not at least one of the one or more measurements can be provided from the second radio access network node.

FIG. 8 illustrates a flow chart according to an example embodiment of a method performed by an apparatus 1100 of a second radio access network node 105. For example, the apparatus 1100 may comprise, or be comprised in, the second radio access network node 105.

Referring to FIG. 8, in block 801, the apparatus receives, from a first radio access network node, a request message for requesting one or more measurements, wherein the request message comprises priority information indicating a priority level per a measurement of the one or more measurements.

In block 802, the apparatus determines, based at least on the priority information, whether at least one of the one or more measurements can be provided to the first radio access network node.

In block 803, the apparatus transmits, to the first radio access network node, based on the determination, a response message indicating whether or not the at least one of the one or more measurements can be provided to the first radio access network node.

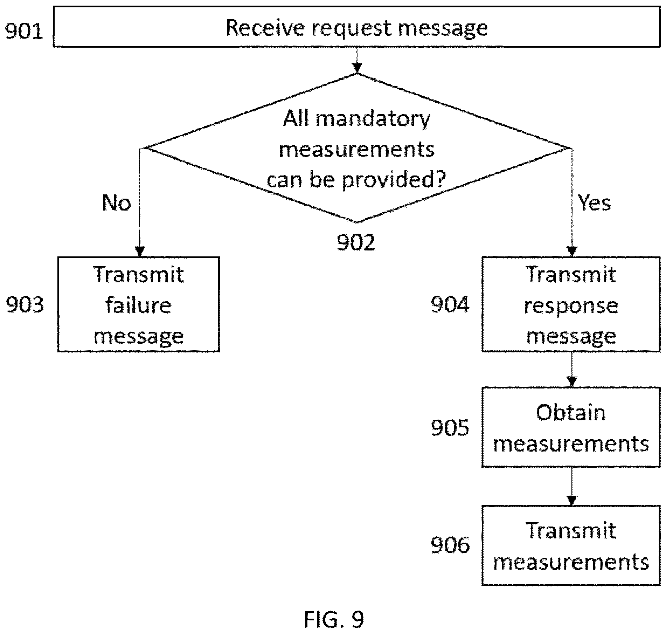

FIG. 9 illustrates a flow chart according to an example embodiment of a method performed by an apparatus 1100 of a second radio access network node 105. For example, the apparatus 1100 may comprise, or be comprised in, the second radio access network node 105.

Referring to FIG. 9, in block 901, the apparatus receives, from a first radio access network node, a request message for requesting at least one or more mandatory measurements and/or one or more optional measurements, wherein the request message comprises priority information indicating a priority level per a measurement of the one or more mandatory measurements and/or the one or more optional measurements.

In block 902, the apparatus determines, based at least on the priority information, whether all of the one or more mandatory measurements can be provided to the first radio access network node.

In block 903, based on determining that at least one of the one or more mandatory measurements cannot be provided (block 902: no), the apparatus transmits a failure message indicating that the one or more mandatory measurements cannot be provided.

Alternatively, in block 904, based on determining that all of the one or more mandatory measurements can be provided (block 902: yes), the apparatus transmits, to the first radio access network node, based on the determination, a response message indicating that at least the one or more mandatory measurements can be provided. The response message may also indicate whether at least one of the one or more optional measurements can be provided.

In block 905, the apparatus obtains at least the one or more mandatory measurements. The apparatus may also obtain the at least one of the one or more optional measurements, if the apparatus indicated in the response message that it can provide the at least one optional measurement.

In block 906, the apparatus transmits, to the first radio access network node, at least the one or more mandatory measurements. The apparatus may also transmit, to the first radio access network node, the at least one of the one or more optional measurements, if it was able to obtain the at least one optional measurement.

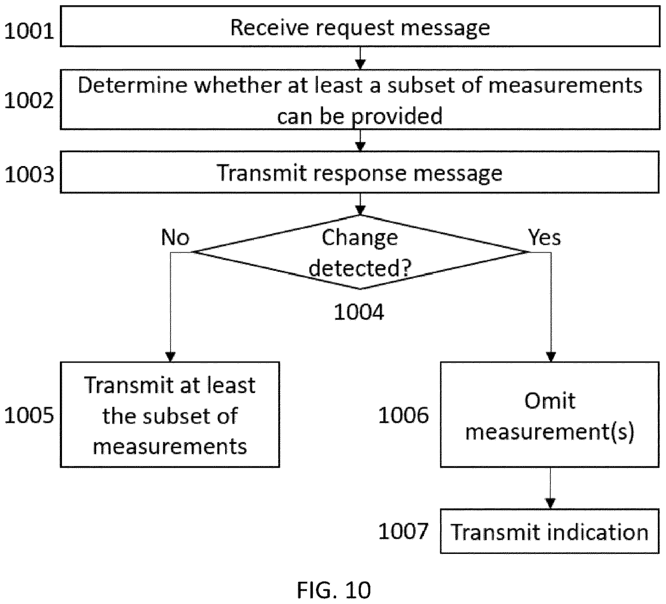

FIG. 10 illustrates a flow chart according to an example embodiment of a method performed by an apparatus 1100 of a second radio access network node 105. For example, the apparatus 1100 may comprise, or be comprised in, the second radio access network node 105.

Referring to FIG. 10, in block 1001, the apparatus receives, from a first radio access network node, a request message for requesting one or more measurements, wherein the request message comprises priority information indicating a priority level per a measurement of the one or more measurements.

For example, the one or more measurements may comprise one or more mandatory measurements and one or more optional measurements.

In block 1002, the apparatus determines, based at least on the priority information, whether at least a subset of the one or more measurements can be provided to the first radio access network node.

In block 1003, the apparatus transmits, to the first radio access network node, based on the determination, a response message indicating that at least the subset of the one or more measurements can be provided to the first radio access network node.

In block 1004, the apparatus determines whether any change is detected in one or more conditions of the second radio access network node. For example, the apparatus may detect whether the second radio access network node is overloaded.

In block 1005, in case no change is detected (block 1004: no), the apparatus transmits the at least subset of the one or more measurements to the first radio access network node.

Alternatively, in block 1006, based on detecting the change (block 1004: yes) and based on the priority information, the apparatus determines at least one measurement to be omitted or cancelled from the at least subset of the one or more measurements that it determined to provide.

In block 1007, the apparatus transmits, to the first radio access network node, indicating that the at least one omitted measurement cannot be provided to the first radio access network node.

The first radio access network node then considers that the reporting of the at least one omitted measurement has been cancelled.

The blocks, related functions, and information exchanges (messages) described above by means of FIGS. 3-10 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

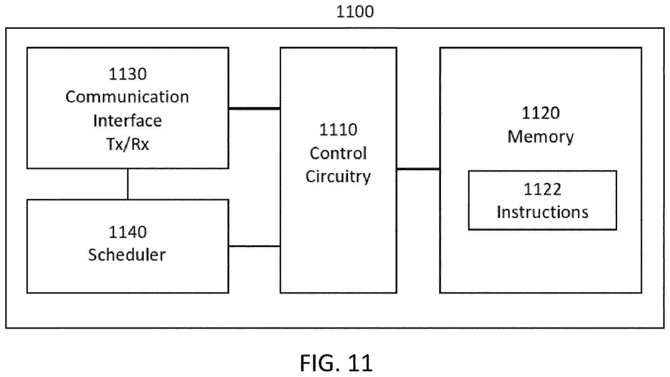

FIG. 11 illustrates an example of an apparatus 1100 comprising means for performing one or more of the example embodiments described above. For example, the apparatus 1100 may be an apparatus such as, or comprising, or comprised in, the first radio access node 104 or the second radio access network node 105.

The radio access network node may also be referred to, for example, as a network element, a next generation radio access network (NG-RAN) node, a NodeB, an eNB, a gNB, a base transceiver station (BTS), a base station, an NR base station, a 5G base station, an access node, an access point (AP), a cell site, a relay node, a repeater, an integrated access and backhaul (IAB) node, an IAB donor node, a distributed unit (DU), a central unit (CU), a baseband unit (BBU), a radio unit (RU), a radio head, a remote radio head (RRH), or a transmission and reception point (TRP).

The apparatus 1100 may comprise, for example, a circuitry or a chipset applicable for realizing one or more of the example embodiments described above. The apparatus 1100 may be an electronic device comprising one or more electronic circuitries. The apparatus 1100 may comprise a communication control circuitry 1110 such as at least one processor, and at least one memory 1120 storing instructions 1122 which, when executed by the at least one processor, cause the apparatus 1100 to carry out one or more of the example embodiments described above. Such instructions 1122 may, for example, include computer program code (software). The at least one processor and the at least one memory storing the instructions may provide the means for providing or causing the performance of any of the methods and/or blocks described above.

The processor is coupled to the memory 1120. The processor is configured to read and write data to and from the memory 1120. The memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1120 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1120 or, alternatively or additionally, they may be received, by the apparatus, via an electromagnetic carrier signal and/or may be copied from a physical entity such as a computer program product. Execution of the computer readable instructions causes the apparatus 1100 to perform one or more of the functionalities described above.

The memory 1120 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1100 may further comprise or be connected to a communication interface 1130, such as a radio unit, comprising hardware and/or software for realizing communication connectivity with one or more wireless communication devices according to one or more communication protocols. The communication interface 1130 comprises at least one transmitter (Tx) and at least one receiver (Rx) that may be integrated to the apparatus 1100 or that the apparatus 1100 may be connected to. The communication interface 1130 may provide means for performing some of the blocks for one or more example embodiments described above. The communication interface 1130 may comprise one or more components, such as: power amplifier, digital front end (DFE), analog-to-digital converter (ADC), digital-to-analog converter (DAC), frequency converter, (de) modulator, and/or encoder/decoder circuitries, controlled by the corresponding controlling units.

The communication interface 1130 provides the apparatus with radio communication capabilities to communicate in the wireless communication network. The communication interface may, for example, provide a radio interface to one or more wireless communication devices. The apparatus 1100 may further comprise or be connected to another interface towards a core network such as the network coordinator apparatus or AMF, and/or to the access nodes of the wireless communication network.

The apparatus 1100 may further comprise a scheduler 1140 that is configured to allocate radio resources. The scheduler 1140 may be configured along with the communication control circuitry 1110 or it may be separately configured.

It is to be noted that the apparatus 1100 may further comprise various components not illustrated in FIG. 11. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus of a first radio access network node, the apparatus comprising at least one processor, and at least one memory storing instructions that, when executed by the at least one processor, cause the apparatus at least to:
transmit, to a second radio access network node, a request message for requesting one or more measurements, wherein the request message comprises priority information indicating a priority level per a measurement of the one or more measurements; and
receive, from the second radio access network node, a response message indicating whether or not at least one of the one or more measurements can be provided from the second radio access network node.

2. The apparatus according to claim 1, wherein the response message comprises a list indicating a first subset of the one or more measurements to be provided from the second radio access network node; and
wherein the apparatus is further caused to receive at least the first subset of the one or more measurements.

3. The apparatus according to claim 1, wherein the response message comprises a first list indicating a first subset of the one or more measurements to be provided and a second list indicating a second subset of the one or more measurements not to be provided, wherein the first subset has a higher priority level than a priority level of the second subset;
wherein the apparatus is further caused to receive the first subset of the one or more measurements.

4. The apparatus according to claim 3, wherein the one or more measurements comprise one or more mandatory measurements and one or more optional measurements,
wherein the first subset to be provided includes at least one of the one or more mandatory measurements, and
wherein the second subset not to be provided includes at least one of the one or more optional measurements.

5. The apparatus according to claim 4, wherein the priority information indicates a priority level threshold for distinguishing between the one or more mandatory measurements and the one or more optional measurements.

6. The apparatus according to any of claims 4-5, further being caused to:
determine the one or more mandatory measurements and the one or more optional measurements to be requested from the second radio access network node,
wherein the one or more mandatory measurements and the one or more optional measurements are associated with at least one of: the second radio access network node or at least one user device, and
wherein the priority information indicates a priority level per a measurement of the one or more mandatory measurements and the one or more optional measurements.

7. The apparatus according to any of claims 4-6, further being caused to:
provide at least one of the one or more mandatory measurements as input information for training or executing a machine learning model configured for mobility optimization or network energy saving.

8. The apparatus according to claim 1, wherein the response message is a failure message indicating that the one or more measurements cannot be provided, and
wherein the one or more measurements comprise one or more mandatory measurements.

9. An apparatus of a second radio access network node, the apparatus comprising at least one processor, and at least one memory storing instructions that, when executed by the at least one processor, cause the apparatus at least to:
receive, from a first radio access network node, a request message for requesting one or more measurements, wherein the request message comprises priority information indicating a priority level per a measurement of the one or more measurements;
determine, based at least on the priority information, whether at least one of the one or more measurements can be provided to the first radio access network node; and
transmit, to the first radio access network node, based on the determination, a response message indicating whether or not the at least one of the one or more measurements can be provided to the first radio access network node.

10. The apparatus according to claim 9, further being caused to:
receive, from one or more other radio access network nodes, one or more other request messages for requesting one or more measurements,
wherein the one or more other request messages comprise priority information indicating a priority level per a measurement of the one or more measurements requested by the one or more other radio access network nodes; and
determine, based on the priority information received from the first radio access network node and the priority information received from the one or more other radio access network nodes, at least one measurement to report to at least one of: the first radio access network node or at least one of the one or more other radio access network nodes.

11. The apparatus according to claim 10, wherein the at least one measurement to report comprises at least one measurement having a higher priority level than a priority level of one or more other measurements requested by the first radio access network node or the one or more other radio access network nodes.

12. The apparatus according to any of claims 10-11, wherein the response message comprises at least one of:
a first list indicating a first subset of the one or more measurements to be provided to the first radio access network node,
a second list indicating a second subset of the one or more measurements not to be provided to the first radio access network node,
a third list indicating a third subset of the one or more measurements to be provided to the one or more other radio access networks nodes, or
a fourth list indicating a fourth subset of the one or more measurements not to be provided to the one or more other radio access network nodes.

13. The apparatus according to claim 12, wherein the first subset includes one or more mandatory measurements requested by the first radio access network node;
the second subset includes at least one of one or more optional measurements requested by the first radio access network node;
the third subset includes at least one of one or more mandatory measurements requested by the one or more other radio access network nodes; and
the fourth subset includes at least one of one or more optional measurements requested by the one or more other radio access network nodes,
wherein the transmitted at least one measurement comprises at least the first subset or the third subset.

14. The apparatus according to any of claims 9-12, wherein the one or more measurements requested by the first radio access network node comprise one or more mandatory measurements and one or more optional measurements;
wherein the apparatus is caused to:
determine whether all of the one or more mandatory measurements can be provided to the first radio access network node;
determine, based on the priority information received from the first radio access network node and based on the determination that all of the one or more mandatory measurements can be provided to the first radio access network node, a subset of the one or more optional measurements that can be provided to the first radio access network node,
wherein the subset comprises at least one optional measurement with a higher priority level than a priority level of one or more other optional measurements in the one or more optional measurements to be provided to the first radio access network node,
wherein the response message indicates the subset of the one or more optional measurements that can be provided and the one or more other optional measurements that cannot be provided; and
transmit the one or more mandatory measurements and the subset of the one or more optional measurements to the first radio access network node.

15. The apparatus according to any of claims 9-14, wherein the response message indicates that the one or more measurements can be provided to the first radio access network node,
wherein the apparatus is further caused to:
detect a change in one or more conditions of the second radio access network node;
determine, based on detecting the change and based on the priority information, at least one measurement to be omitted from the one or more measurements; and
transmit an indication indicating that the at least one measurement cannot be provided to the first radio access network node.
